# EUROPÄISCHE PATENTSCHRIFT

(11) **EP 4 599 959 B1**
(45) Veröffentlichungstag und Bekanntmachung des Hinweises auf die Patenterteilung: **21.10.2026**
(21) Anmeldenummer: 25156535.4
(22) Anmeldetag: 07.02.2025
(51) Int. Cl.: B21H 3/04, B21H 3/06, F16B 25/00

(54) **VERFAHREN ZUM HERSTELLEN EINER SCHRAUBE**
METHOD FOR PRODUCING A SCREW
PROCÉDÉ DE FABRICATION D'UNE VIS

(30) Priorität: 09.02.2024 DE 102024103756
(43) Veröffentlichungstag der Anmeldung: 13.08.2025
(73) Patentinhaber: Ludwig Hettich Holding GmbH & Co. KG, 78713 Schramberg-Sulgen (DE)
(72) Erfinder: Stiebitz, Günter, Waldenburg 74638 (DE)
(74) Vertreter: Lucke, Andreas

(56) Entgegenhaltungen:
- EP-B1- 3 445 513

## Beschreibung

### TECHNISCHES GEBIET

Die vorliegende Erfindung betrifft ein Verfahren zum Herstellen einer Schraube. Insbesondere betrifft sie ein Verfahren zum Herstellen einer Schraube, wie sie für moderne und zukunftsweisende Verwendung im konstruktiven Holzbau vorteilhaft ist.

### HINTERGRUND DER ERFINDUNG

Aus EP 3 445 513 B1 ist ein Verfahren zur Herstellung einer Schraube bekannt, bei welchem ein erster Abschnitt (14) mittels Walzens mit Rollen und ein zweiter Abschnitt (12) mittels Walzens mit Flachbacken hergestellt wird.

Zur Erreichung der globalen Klimaziele ist es unumgänglich, im Bauwesen ein starkes Augenmerk auf die Reduktion des CO2-Footprint zu legen. In diesem Zusammenhang tritt speziell der konstruktive Holzbau in den Fokus, wenngleich derzeit der Anteil des Holzbaus im Vergleich zu Stahl und Beton derzeit noch vergleichsweise gering ist. In den vergangenen 20 Jahren ist im konstruktiven Holzbau weltweit eine dynamische Entwicklung zu verzeichnen. Die Innovationen in den Bereichen Holzwerkstoffe, Verbindungen und deren Bemessung erlauben heute deutlich effektivere Baustrukturen. Beispielsweise gehören 12-geschossige Gebäude, die vor Jahren so noch nicht vorstellbar erschienen, mittlerweile zum Stand der Technik. Mit seinem von Natur aus sehr günstigen CO2-Footprint, der möglichen industriellen Vorfertigung und den sehr kurzen Bauzeiten vor Ort ist der konstruktive Holzbau prädestiniert für nachhaltiges Bauen und hat ein großes Entwicklungspotenzial im modernen Bauwesen.

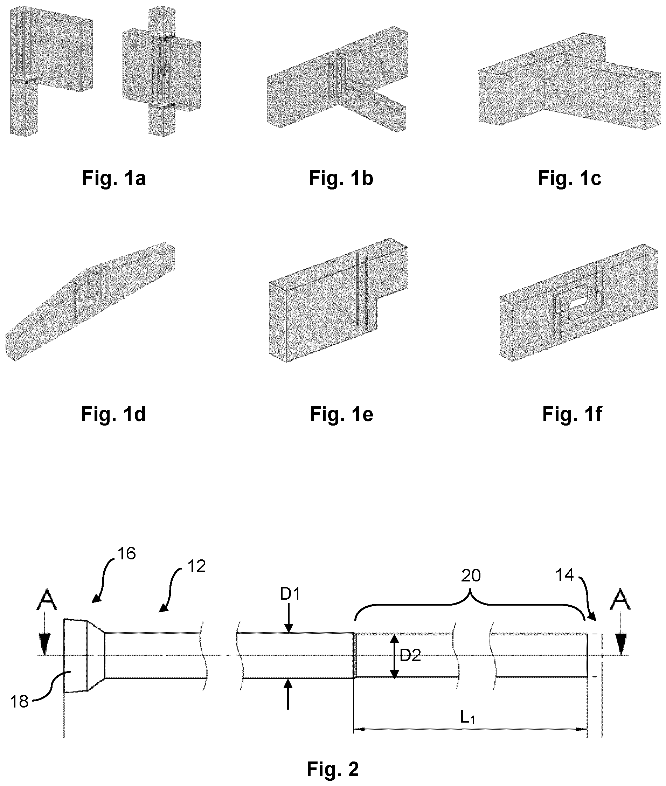

Eine wichtige Voraussetzung für diese Bauweise sind geeignete Verbindungsmittel, speziell Schrauben mit Vollgewinde, mit deren Hilfe örtlich hohe Lastkonzentrationen in die Holzbauteile übertragen werden können. In den Figuren 1a bis 1f sind typische Anwendungen solcher Verbindungsmittel im konstruktiven Holzbau schematisch dargestellt, beispielsweise Verstärkungen (Fig. 1a), Querzugverstärkungen (Fig. 1b), Haupt-Nebenträger-Verbindungen (Fig. 1c), Verstärkungen von Trägern (Fig. 1d), Verstärkungen von Ausklinkungen (Fig. 1e) und Verstärkungen von Durchbrüchen (Fig. 1f).

Aus den in Fig. 1a-f gezeigten Anwendungsbeispielen ist zu erkennen, dass für derartige Anwendungsfälle besonders schlanke und lange Schrauben, und insbesondere Vollgewindeschrauben benötigt werden. In der vorliegenden Offenbarung ist der Begriff "Schraube" weit zu verstehen, und schließt auch eine Gewindestange mit ein. Derartig lange und schlanke Vollgewindeschrauben bringen aber spezielle Anforderungen an die Verarbeitbarkeit mit sich, die ihrerseits die Herstellung derartiger Vollgewindeschrauben herausfordernd macht.

Eine besondere Herausforderung besteht darin, die Schrauben exakt entsprechend der Bemessung zu platzieren, und insbesondere die Abstände der Schrauben vom Bauteilrand und die Abstände zwischen benachbarten Schrauben exakt einzuhalten. Bei der Montage werden die Schrauben typischerweise in Führungsbohrungen eingebracht, deren Tiefe lediglich etwa das Zehnfache des Nenndurchmessers d der Schraube betragen. Bei den für den konstruktiven Holzbau benötigten langen und schlanken Schrauben bedeutet dies, dass die Schrauben über ein Vielfaches dieser Führungsbohrungslänge ohne weiteres Vorbohren eingeschraubt werden, was in der Praxis Schwierigkeiten mit der exakten Platzierung mit sich bringt. Nach den Erkenntnissen des Erfinders kann die exakte Platzierung verbessert werden, wenn bereits bei der Herstellung der Schraube auf eine besonders gute Geradheit geachtet wird.

Eine weitere Anforderung besteht darin, dass bei derartigen Schrauben hohe Lasten zwischen den zu verbindenden Bauteilen übertragen werden, was höhere Ansprüche an die Festigkeit stellt. Ausreichende Festlichkeiten können in der Praxis erreicht werden, indem das Schraubenmaterial vergütet wird, wobei diese Vergütung typischerweise eine Wärmebehandlung beinhaltet.

Bei der Herstellung derartiger Schrauben stellt die Erzeugung des Gewindes einen zentralen Fertigungsschritt dar. Im Hinblick auf eine kosten- und materialsparende Fertigung werden die Gewinde vorzugsweise in einem Walzverfahren hergestellt. Für Schrauben mit moderaten Gewindelängen bietet sich das Walzen mit Flachbacken an, weil es einen sehr hohen Durchsatz gestattet. Beim Walzen mit Flachbacken wird der Schraubenrohling zwischen zwei sich gegeneinander bewegende Walzbacken zugeführt und beim Abwälzen des Rohlings das Gewinde geformt. Bei diesem Verfahren findet der Umformungsprozess vornehmlich in radialer Richtung statt, axiale Verformungen treten nur in sehr geringem Maße auf. Eine detailliertere Beschreibung des Walzverfahrens mit Flachbacken ist beispielsweise dem Fachbuch *Heinz Tätsch,* "Praxis der Umformtechnik" , 7. Auflage Juni 2003 zu entnehmen, wobei das Arbeitsschema insbesondere in Abbildung 6.1 veranschaulicht ist.

Allerdings werden im Stand der Technik Gewinde nur bis zu einer maximalen Länge von 600 mm im Walzverfahren mit Flachbacken gewalzt, für größere Gewindelängen sind keine Walzmaschinen verfügbar. Speziell für den konstruktiven Holzbau sind aber in etlichen Anwendungen Schrauben mit längeren Gewinden wünschenswert. Die Ausdehnung des Walzverfahrens mit Flachbacken auf Gewindelängen von mehr als 600 mm ist denkbar, stellt sich in der Praxis jedoch als schwierig dar, weil sowohl die Maschinen- als auch die Werkzeugkosten überproportional ansteigen.

Eine weitere Schwierigkeit in diesem Zusammenhang stellen die erhöhten Anforderungen an die Festigkeit und die dadurch in der Regel erforderliche Wärmebehandlung dar: Wenn der Schraubenrohling vor dem Walzen bereits wärmebehandelt wird, erhöht sich im Zuge der damit angestrebten Erhöhung der Festigkeit auch der Leistungsbedarf im Walzprozess, nach Erkenntnissen des Erfinders bei gleicher Schraubengeometrie um typischerweise 30 bis 50 %. Dies bedeutet, dass in diesem Fall auch die an sich für unbehandelte Werkstoffe im Flachbacken-Verfahren erreichbaren Gewindelängen von bis zu 600 mm in der Praxis nicht erzielt werden können. Alternativ hierzu kann die Wärmebehandlung nach dem Walzen des Gewindes durchgeführt werden. Allerdings tritt dabei das Problem auf, dass die Schraube sich im Zuge der Wärmebehandlung verformt und in einem nachgelagerten Schritt gerichtet werden muss, um die oben genannten Anforderungen an die Geradheit zu erfüllen.

Die zum Walzen benötigte Leistung hängt nicht nur von der Länge des Gewindes ab, sondern steigt auch mit dem Durchmesser des Rohlings. Dies bedeutet, dass die an sich im Rahmen des Walzens mit Flachbacken verfügbaren Walzlängen von 600 mm in der Praxis nur für Rohlinge mit moderaten Durchmessern zur Verfügung stehen, nicht aber für Rohlinge mit größeren Durchmessern, und dies selbst dann, wenn der Rohling nicht vorvergütet ist. In jedem Fall sind der Länge von Gewinden, die sich mit dem Walzverfahren mit Flachbacken herstellen lassen, Grenzen gesetzt.

Für die Herstellung von Schrauben mit größeren Gewindelängen kann das Walzen im Axial-Durchlaufverfahren zur Anwendung kommen. Bei diesem Verfahren wird der Schraubenrohling zwischen rotierende Walzwerkzeuge zugeführt. Die Drehachsen der Walzwerkzeuge sind dabei üblicherweise so gegeneinander geneigt, dass beim ein Formen des Gewindes ein axialer Vorschub reduziert wird mit dem das Walzgut durch den Prozess geführt wird. Eine ausführliche Beschreibung des Axial-Durchlaufverfahrens findet sich ebenfalls in dem Fachbuch *Heinz Tätsch,* "Praxis der Umformtechnik" , 7. Auflage Juni 2003 kommen zusammen im Zusammenhang mit der dort gezeigten Abbildung 6.4.

### ZUSAMMENFASSUNG DER ERFINDUNG

Der Erfindung liegt die Aufgabe zugrunde, ein Verfahren anzugeben, das speziell die Herstellung von Schrauben mit langen Gewinden, wie sie beispielsweise im konstruktiven Holzbau wünschenswert sind, gestattet. Diese Aufgabe wird durch ein Verfahren nach Anspruch 1 gelöst. Vorteilhafte Weiterbildungen sind in den abhängigen Ansprüchen angegeben. Das erfindungsgemäße Verfahren umfasst die folgenden Schritte:
A. Bereitstellen eines Schraubenrohlings mit einem ersten Durchmesser, wobei der Schraubenrohling ein erstes Ende hat, das dem führenden Ende der aus dem Schraubenrohling herzustellen Schraube entspricht, und ein zweites Ende hat, dass dem nachlaufenden Ende der aus dem Schraubenrohling herzustellen Schraube entspricht,
B. Reduzieren des ersten Durchmessers auf einen zweiten Durchmesser in einem ersten Abschnitt, der dem ersten Ende des Schraubenrohlings benachbart ist,
C. Bearbeiten des Rohlings im genannten ersten Abschnitt durch Walzen mit Flachbacken, um im ersten Abschnitt ein Gewinde und am ersten Ende eine Gewindespitze auszubilden, und
D. Bearbeiten des Rohlings in einem an den ersten Abschnitt anschließenden zweiten Abschnitt durch Walzen in einem Axial-Durchlaufverfahren, um in dem zweiten Abschnitt ein Gewinde auszubilden, welches das Gewinde im ersten Abschnitt kontinuierlich fortsetzt.

Dabei sind der erste und der zweite Durchmesser des Schraubenrohlings jeweils so gewählt, dass beim Bearbeiten in den Schritten C und D ein einheitliches oder zumindest näherungsweise einheitliches Gewinde mit der vorbestimmten Gewindegeometrie gebildet wird, welches sich über den ersten den zweiten Abschnitt erstreckt.

Das erfindungsgemäße Verfahren kombiniert zwei unterschiedliche Walzverfahren beim Herstellen der Schraube, nämlich einen Schritt C des Walzen mit Flachbacken und einen Schritt D des Walzens im Axial-Durchlaufverfahren.

Durch Walzen eines Teils des Gewindes, nämlich des oben genannten "zweiten Abschnitts", im Axial-Durchlaufverfahren lassen sich Schrauben von praktisch beliebiger Länge herstellen. Dadurch ergeben sich völlig neue Möglichkeiten im konstruktiven Holzbau, beispielsweise unter Verwendung von Vollgewindeschrauben mit einer Länge von mehr als 1000 mm, speziell in einem Längenbereich von 1300 bis 2000 mm, der im Stand der Technik noch keine Anwendung gefunden hat. Auch gestattet es der Walzprozess im Axial-Durchlaufverfahren, den Rohling bereits vor dem Walzen wärmezubehandeln, um seine Festigkeit zu erhöhen. Dadurch lassen sich die oben beschriebenen Probleme einer Verformung der Schraube im Zuge einer der Gewindeformung nachgelagerten Wärmebehandlung vermeiden, die andernfalls in einem aufwändigen Richtprozess korrigiert werden müsste, um die oben genannten hohen Anforderungen an die Geradheit der Schraube zu erfüllen.

Die erfindungsgemäße Schraube hat eine Schraubenspitze, um ein Einschrauben in einem nicht-vorgebohrten Teil des Verankerungsgrundes, beispielsweise der Holzkonstruktion zu gestatten. Im Anschluss eines Walzprozesses im Axial-Durchlaufverfahren kann in bekannten Herstellungsverfahren als Schraubenspitze eine Bohrspitze in einem sogenannten "Kneifverfahren" ausgebildet werden. Derartige Bohrspitzen finden bei Holzschrauben regelmäßig Anwendung. Der Erfinder hat allerdings festgestellt, dass für die hier angestrebten Anwendungen ein wesentlich besseres Setzverhalten erreicht werden kann, wenn anstelle einer Bohrspitze eine Gewindespitze verwendet wird. Als "Gewindespitze" wird in der vorliegenden Offenbarung ein sich verjüngender, spitz zulaufender Endabschnitt am führenden Ende der Schraube verstanden, in den sich das Gewinde der Schraube fortsetzt. Insbesondere kann eine "Gewindespitze" ein sich verjüngender Endabschnitt sein, der über mindestens 50 %, vorzugsweise mindestens 70 % seiner axialen Länge einen Gewindegang aufweist. Der Erfinder hat festgestellt, dass sich die exakte Setzung der Schraube entsprechend der Bemessung bei den oben beschriebenen Anwendungen deutlich besser erreichen lässt, wenn anstelle einer Bohrspitze eine Gewindespitze vorhanden ist.

Nach Erkenntnissen des Erfinders ist nämlich die Gewindespitze in der Praxis wesentlich besser dazu geeignet, die Schraube auf ihrem vergleichsweise langen Weg durch den nicht-vorgebohrten Verankerungsgrund zu führen und exakt an der geplanten, üblicherweise durch die Bemessung vorgegebene Position zu setzen. Dies gilt insbesondere, wenn vergleichsweise große Gewindesteigungen verwendet werden, die ihrerseits für das effiziente Setzen von langen Vollgewindeschrauben vorteilhaft sind. Geeignete Gewindesteigungen p betragen für Gewindeinnendurchmesser bis zu 10 mm beispielsweise zwischen 65 % und 90 %, vorzugsweise zwischen 70 % und 80 % des Nenndurchmessers, und für Nenndurchmesser oberhalb 10 mm (unabhängig von dem exakten Durchmesser) beispielsweise zwischen 0,65 und 0,9 mm, vorzugsweise zwischen 0,7 und 0,8 mm. Bei derartigen Gewindesteigungen bietet die Bohrspitze nicht die erwünschte zentrierende Wirkung, die für lange große Gewindelängen erstrebenswert ist.

Um eine solche Gewindespitze vorzusehen, wird der erste Abschnitt des Schraubenrohlings in Schritt C in einem Walzverfahren mit Flachbacken gemeinsam mit einem ersten Abschnitt des Gesamt-Gewindes ausgebildet.

Dieses Gewinde wird dann in Schritt D in dem genannten Walzprozess im Axial-Durchlaufverfahren "verlängert". Konkret wird der Rohling in dem an den ersten Abschnitt anschließenden zweiten Abschnitt durch Walzen in einem Axial-Durchlaufverfahren bearbeitet, um in dem zweiten Abschnitt ein Gewinde auszubilden, welches das Gewinde im ersten Abschnitt kontinuierlich fortsetzt. Dabei ist allerdings zu beachten, dass der Walzprozess im Axial-Durchlaufverfahren, anders als der Walzprozess mit Flachbacken, mit einer deutlichen axialen Verformung des Walzguts verbunden ist, der unter anderen von der Verformungsfestigkeit des Walzguts abhängt. Um diese axiale Verformung auszugleichen ist in Schritt B vorgesehen, den ersten Durchmesser des Rohlings aus Schritt A im nachfolgenden Schritt B in dem genannten ersten Abschnitt, in dem das Gewinde (und die Gewindespitze) durch einen Walzprozess mit Flachbacken auszubilden ist, zuvor auf einen zweiten Durchmesser zu reduzieren.

Konkret sind der erste und der zweite Durchmesser des Schraubenrohlings jeweils so gewählt, dass beim Bearbeiten in den Schritten C und D ein einheitliches oder zumindest näherungsweise einheitliches Gewinde mit der vorbestimmten Gewindegeometrie gebildet wird, welches sich über den ersten den zweiten Abschnitt erstreckt. Auf diese Weise lassen sich Schrauben mit sehr langen Gewinden effizient herstellen, die sich gleichzeitig sehr exakt setzen lassen. In manchen Ausführungsformen kann der zweite Durchmesser beispielsweise gegenüber dem ersten Durchmesser um 3,5 % bis 20 % verringert werden, um nach der Bearbeitung in den Schritten C und D ein einheitliches Gewinde zu erhalten.

In einer vorteilhaften Ausführungsform umfasst oder besteht der in Schritt A bereitgestellte Schraubenrohling aus einem vergüteten Material, insbesondere vergütetem Stahl. Dabei ist das vergütetete Material insbesondere ein wärmebehandeltes Material. Die beiden Walzprozesse aus den Schritten C und D lassen sich problemlos auch an einem vergüteten Material mit erhöhter Festigkeit durchführen. Auf diese Weise kann eine nachgelagerte Wärmebehandlung mit der geschilderten Problematik der Verformung vermieden werden.

In bevorzugten Ausführungsformen kann der Schritt des Vergütetes, insbesondere Wärmebehandelns des Schraubenrohlings oder eines Vorläuferprodukts des Schraubenrohlings vor Schritt A Teil des Verfahrens sein.

In bevorzugten Ausführungsformen beträgt die Länge des sich über den ersten und den zweiten Abschnitt erstreckenden Gewindes mindestens 500 mm, vorzugsweise mindestens 650 mm, besonders vorzugsweise mindestens 1000 mm und ganz besonders bevorzugt mindestens 1500 mm.

Der oben genannte Begriff der "Gewindegeometrie" ist breit zu verstehen. Insbesondere kann die Gewindegeometrie durch einen Nenndurchmesser *d* und die Gewindesteigung *p* gekennzeichnet sein. Mit anderen Worten definiert beispielsweise bereits eine Kombination von Nenndurchmesser *d* und die Gewindesteigung *p* eine Gewindegeometrie im Sinne der vorliegenden Offenbarung. Zusätzlich kann die Gewindegeometrie auch durch einen Kerndurchmesser gekennzeichnet sein.

In bevorzugten Ausführungsformen weist der genannte erste Abschnitt eine Länge L1 von mindestens sechs Gewindegängen auf, also eine Länge L1 ≥ 6 · *p*. Bevorzugt ist hierbei allerdings L1 ≥ 9 · *p*. Die Länge des ersten Abschnitts soll lang genug sein, damit sich das darin gebildete Gewinde nachfolgend durch das Werkzeug zum Walzen im Axial-Durchlaufverfahren präzise fortsetzen lässt.

In bevorzugten Ausführungsformen weist der genannte erste Abschnitt eine Länge von höchstens 150 mm, vorzugsweise höchstens 120 mm, besonders vorzugweise höchstens 100 mm und insbesondere höchstens 80 mm auf. Diese Längen gestatten eine effiziente Reduktion des Durchmessers des Rohlings im ersten Abschnitt (Schritt B).

Wie eingangs erwähnt, werden der der erste und der zweite Durchmesser so aufeinander abgestimmt, dass sich trotz der unterschiedlichen Walzverfahren in den Schritten C und D ein einheitliches oder zumindest näherungsweise einheitliches Gewinde mit der vorbestimmten Gewindegeometrie gebildet wird, welches sich über den ersten und den zweiten Abschnitt erstreckt. Ein "zumindest näherungsweise einheitliches Gewinde mit der vorbestimmten Gewindegeometrie" kann insbesondere ein Gewinde sein, bei dem der Außendurchmesser in dem sich über den ersten und den zweiten Abschnitt erstreckenden einheitlichen oder zumindest näherungsweise einheitlichen Gewinde um weniger als +/- 5,0 %, vorzugsweise weniger als +/- 3,5 % und besonders vorzugsweise weniger als+/- 2,5 % variiert.

Vorzugsweise gilt für das Produkt aus der k-ten Potenz des Nenndurchmesser d in Millimeter und der Länge L_{G} in Millimeter des einheitlichen, sich über den ersten und zweiten Abschnitt erstreckenden Gewindes folgendes: ${L}_{G} ⋅ {d}^{k} \leq 10 , 000$ wobei gilt k = 1,3 oder k = 1,5 oder k = 1,8. In der obigen Beziehung sind die Zahlenwerte der Länge *L_{G}* und des Nenndurchmessers *d* jeweils in Millimeter dimensionslos einzusetzen.

In einer vorteilhaften Weiterbildung wird ein Schraubenkopf am zweiten Ende des Schraubenrohlings ausgebildet. Dabei kann der Schraubenkopf durch Kaltumformung, insbesondere durch Stauchung und Pressung ausgebildet werden. In alternativen Ausführungsformen kann der Schraubenkopf allerdings auch durch Warmumformung ausgebildet werden, wobei das Werkstück vorzugsweise induktiv erwärmt wird.

Vorzugsweise werden die Schritte B und C in einem kontinuierlichen Prozess auf derselben Maschine bzw. in derselben Maschinenstraße durchgeführt.

In einer vorteilhaften Ausführungsformen ist das Gewinde ein Holzschraubengewinde.

Vorzugsweise ist die Schraube eine Vollgewindeschraube.

In einer vorteilhaften Ausführungsform ist das Gewinde ein Betongewinde oder ein Fassadenbaugewinde.

In einer vorteilhaften Ausführungsform werden in Schritt C und/oder Schritt D Rippen am Gewindegrund eingewalzt.

In einer vorteilhaften Weiterbildung werden zumindest in dem Gewinde im ersten Abschnitt zumindest abschnittsweise Zähne ausgebildet.

### KURZBESCHREIBUNG DER FIGUREN

Weitere Vorteile und Merkmale der Erfindung ergeben sich aus der folgenden Beschreibung, in der die Erfindung anhand eines Ausführungsbeispiels näher erläutert wird. Darin zeigen:
- FIGS. 1a-f: typische illustrative Anwendungen für lange Vollgewindeschrauben im konstruktiven Holzbau.
- FIG. 2: zeigt ein Zwischenprodukt der Schraube bei einem Herstellungsverfahren nach einer Ausführungsformen der Erfindung nach dem Schritt B.
- FIG. 3: zeigt ein Zwischenprodukt der Schraube bei dem Herstellungsverfahren nach einer Ausführungsformen der Erfindung nach dem Schritt C.
- Fig. 4: zeigt die fertige Schraube, die bei dem Herstellungsverfahren nach einer Ausführungsformen der Erfindung nach dem Schritt D erhalten wird.

### BESCHREIBUNG DER BEVORZUGTEN AUSFÜHRUNGSFORMEN

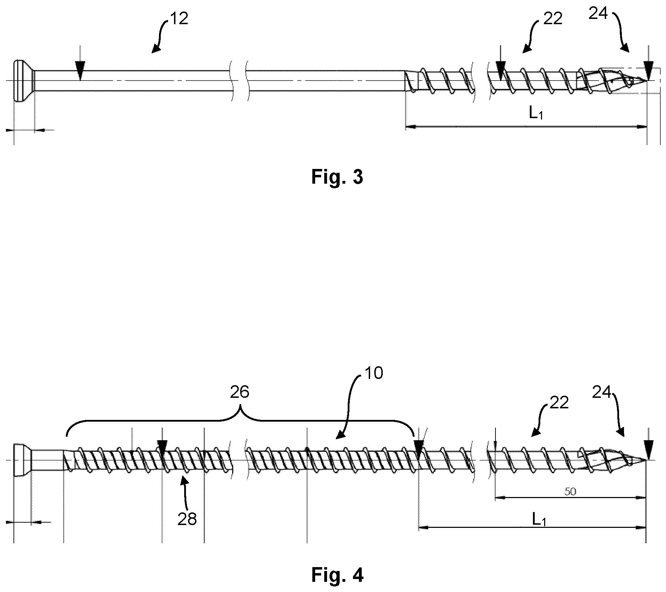

Fig. 2 bis 4 zeigen Zwischenprodukte bzw. das Endprodukt einer Vollgewinde-Holzschraube 10 (siehe Fig. 4), welche nach dem Verfahren der Erfindung hergestellt wird.

In einem Verfahrensschritt A wird ein Schraubenrohling 12 mit einem ersten Durchmesser D1 bereitgestellt. Der Schraubenrohling hat ein erstes Ende 14, das dem führenden Ende der aus dem Schraubenrohling herzustellen Schraube 10 entspricht, und ein zweites Ende 16, dass dem nachlaufenden Ende der aus dem Schraubenrohling 12 herzustellen Schraube entspricht. Am zweiten Ende 16 ist in der gezeigten Ausführungsform bereits ein Schraubenkopf 18 ausgebildet. Ferner ist der Rohling 12 bereits durch Wärmebehandlung vergütet und weist daher eine erhöhte Festigkeit auf.

In einem zweiten Verfahrensschritt B wird in einem ersten Abschnitt 20, der dem ersten Ende 14 des Schraubenrohlings benachbart ist, der Durchmesser vom ersten Durchmesser D1 auf einen zweiten Durchmesser D2 reduziert. Der so erhaltene Rohling 12 ist in Fig. 2 gezeigt. Im gezeigten Ausführungsbeispiel hat der erste Abschnitt eine Länge L1 von 100 mm.

In einem nachfolgenden Verfahrensschritt C wird der Rohling 12 im ersten Abschnitt 20 durch Walzen mit Flachbacken bearbeitet, um im ersten Abschnitt 20 ein Gewinde 22 (siehe Fig. 3) und am ersten Ende 14 eine Gewindespitze 24 auszubilden. Das Zwischenprodukt nach Verfahrensschritt C ist in Fig. 3 gezeigt.

In einem nachfolgenden Verfahrensschritt D wird der Rohling 12 in einem an den ersten Abschnitt 20 anschließenden zweiten Abschnitt 26 durch Walzen in einem Axial-Durchlaufverfahren bearbeitet, um in dem zweiten Abschnitt 26 ein Gewinde 28 auszubilden, welches das Gewinde 22 im ersten Abschnitt 20 kontinuierlich fortsetzt. Im gezeigten Ausführungsbeispiel ist der zweite Abschnitt 1100 mm lang, sodass sich insgesamt eine Gewindelänge von 1200 mm ergibt. Mit dem hier beschriebenen Verfahren lassen sich derartige Vollgewindeschraubenlängen problemlos herstellen.

Beim Walzen des zweiten Abschnitts 26 im Axial-Durchlaufverfahren wird der Rohling 12 (anders als beim Walzprozess mit Flachbacken) deutlich in axialer Richtung verformt. Diese axiale Verformung, gemeinsam mit dem größeren Ausgangsdurchmesser D1 führt dazu, dass die Gewindegeometrie im zweiten Abschnitt 26 mit derjenigen im ersten Abschnitt 20 übereinstimmt. Die Reduktion des Durchmessers im Verfahrensschritt B ist demnach genau so bemessen, dass sich nach Schritt D wie in Fig. 4 gezeigt ein einheitliches (oder zumindest näherungsweise einheitliches) Gewinde mit der vorbestimmten Gewindegeometrie ergibt, welches sich über den ersten den zweiten Abschnitt 20, 26 erstreckt. Im konkreten Zusammenhang bedeutet "einheitliche Gewindegeometrie" dass die Gewinde im ersten und im zweiten Abschnitt 20, 26 sowohl im Hinblick auf ihre Steigung p als auch im Hinblick auf ihren Nenndurchmesser übereinstimmen (oder zumindest näherungsweise übereinstimmen).

### BEZUGSZEICHENLISTE

- 10: Vollgewindeschraube
- 12: Rohling
- 14: erstes Ende
- 16: zweites Ende
- 18: Schraubenkopf
- 20: erster Abschnitt
- 22: Gewinde im ersten Abschnitt
- 24: Gewindespitze
- 26: zweiter Abschnitt
- 28: Gewinde im zweiten Abschnitt

## Patentansprüche

1. Verfahren zur Herstellung einer Schraube (10) mit einer vorbestimmten Gewindegeometrie und einer Schraubenspitze, mit den folgenden Schritten:
A. Bereitstellen eines Schraubenrohlings (12) mit einem ersten Durchmesser (D1), wobei der Schraubenrohling (12) ein erstes Ende (14) hat, das dem führenden Ende der aus dem Schraubenrohling (12) herzustellen Schraube (10) entspricht, und ein zweites Ende (16) hat, das dem nachlaufenden Ende der aus dem Schraubenrohling (12) herzustellen Schraube (10) entspricht,
B. Reduzieren des ersten Durchmessers (D1) auf einen zweiten Durchmesser (D2) in einem ersten Abschnitt (20), der dem ersten Ende (14) des Schraubenrohlings (12) benachbart ist,
C. Bearbeiten des Rohlings (12) im genannten ersten Abschnitt (20) durch Walzen mit Flachbacken, um im ersten Abschnitt (20) ein Gewinde (22) und am ersten Ende (14) die genannte Spitze als Gewindespitze (24) auszubilden,
D. Bearbeiten des Rohlings (12) in einem an den ersten Abschnitt (20) anschließenden zweiten Abschnitt (26) durch Walzen in einem Axial-Durchlaufverfahren, um in dem zweiten Abschnitt (26) ein Gewinde (28) auszubilden, welches das Gewinde (22) im ersten Abschnitt (20) kontinuierlich fortsetzt,
wobei der erste und der zweite Durchmesser (D1, D2) des Schraubenrohlings (12) jeweils so gewählt sind, dass beim Bearbeiten in den Schritten C und D ein einheitliches oder zumindest näherungsweise einheitliches Gewinde mit der vorbestimmten Gewindegeometrie gebildet wird, welches sich über den ersten und den zweiten Abschnitt (20, 26) erstreckt.

2. Verfahren nach Anspruch 1, bei dem der in Schritt A bereitgestellte Schraubenrohling (2) ein vergütetes Material, insbesondere vergüteten Stahl umfasst oder daraus besteht, wobei das vergütetete Material insbesondere ein wärmebehandeltes Material ist.

3. Verfahren nach Anspruch 1 oder 2, ferner umfassend einen Schritt des Vergütens, insbesondere Wärmebehandelns des Schraubenrohlings (12) oder eines Vorläuferprodukts des Schraubenrohlings (12) vor Schritt A.

4. Verfahren nach Anspruch 1 oder 2, bei dem die Länge des sich über den ersten und den zweiten Abschnitt erstreckenden Gewindes (22, 28) mindestens 500 mm, vorzugsweise mindestens 650 mm, besonders vorzugsweise mindestens 1000 mm und ganz besonders bevorzugt mindestens 1500 mm beträgt.

5. Verfahren nach einem der vorhergehenden Ansprüche, bei dem die Gewindegeometrie durch einen Nenndurchmesser d und eine Gewindesteigung p gekennzeichnet ist, wobei die Gewindegeometrie vorzugsweise zusätzlich durch einen Kerndurchmesser gekennzeichnet ist.

6. Verfahren nach einem der vorhergehenden Ansprüche, bei dem der genannte erste Abschnitt (20) eine Länge von mindestens sechs Gewindegängen, vorzugsweise von mindestens neun Gewindegängen hat.

7. Verfahren nach einem der vorhergehenden Ansprüche, bei dem der genannte erste Abschnitt (20) eine Länge von höchstens 150 mm, vorzugsweise höchstens 120 mm, besonders vorzugweise höchstens 100 mm und insbesondere höchstens 80 mm aufweist.

8. Verfahren nach einem der vorhergehenden Ansprüche, bei dem der Außendurchmesser in dem sich über den ersten und den zweiten Abschnitt (20, 26) erstreckenden einheitlichen oder zumindest näherungsweise einheitlichen Gewinde (23, 28) um weniger als +/-10,0 %, vorzugsweise weniger als +/-5,0 %, besonders vorzugsweise weniger als +/-3,5 % und ganz besonders vorzugsweise weniger als+/-2,5 % variiert.

10. Verfahren nach einem der vorhergehenden Ansprüche, bei dem für das Produkt aus der k-ten Potenz des Nenndurchmesser d in Millimeter und der Länge L_{G} in Millimeter des einheitlichen, sich über den ersten und zweiten Abschnitt (20, 26) erstreckenden Gewindes (22, 28) folgendes gilt: ${L}_{G} ⋅ {d}^{k} \leq 10.000$ wobei gilt k = 1,3.

10. Verfahren nach einem der vorhergehenden Ansprüche, bei dem ferner ein Schraubenkopf (18) am zweiten Ende des Schraubenrohlings (12) ausgebildet wird, wobei der Schraubenkopf (18) vorzugsweise durch Kaltumformung, insbesondere durch Stauchung und Pressung, oder durch Warmumformung, insbesondere unter Verwendung einer induktiven Erwärmung, ausgebildet wird.

11. Verfahren nach einem der vorhergehenden Ansprüche, bei dem die Schritte B und C in einem kontinuierlichen Prozess auf derselben Maschine bzw. in derselben Maschinenstraße durchgeführt werden.

12. Verfahren nach einem der vorhergehenden Ansprüche, bei dem das Gewinde (22, 28) ein Holzschraubengewinde ist.

13. Verfahren nach einem der vorhergehenden Ansprüche, bei dem die Schraube (10) eine Vollgewindeschraube ist.

14. Verfahren nach einem der Ansprüche 1 bis 11, bei dem das Gewinde (22, 28) ein Betongewinde oder ein Fassadenbaugewinde ist.

15. Verfahren nach einem der vorhergehenden Ansprüche, bei dem in Schritt C und/oder Schritt D Rippen am Gewindegrund eingewalzt werden, und/oder bei dem zumindest in dem Gewinde (22) im ersten Abschnitt (20) zumindest abschnittsweise Zähne ausgebildet sind.

## Claims

1. A method for producing a screw (10) having a predetermined thread geometry and a screw tip, comprising the following steps:
A. providing a screw blank (12) having a first diameter (D1), the screw blank (12) having a first end (14) corresponding to the leading end of the screw (10) to be produced from the screw blank (12) and a second end (16) corresponding to the trailing end of the screw (10) to be produced from the screw blank (12),
B. reducing the first diameter (D1) to a second diameter (D2) in a first portion (20) adjacent to the first end (14) of the screw blank (12),
C. processing the blank (12) in said first portion (20) by rolling with flat dies to form a thread (22) in the first portion (20) and said tip as a threaded tip (24) at the first end (14),
D. processing the blank (12) in a second portion (26) adjoining the first portion (20) by rolling in an axial feed-through process to form a thread (28) in the second portion (26) which continuously continues the thread (22) in the first portion (20),
wherein the first and the second diameter (D1, D2) of the screw blank (12) are each selected such that during processing in steps C and D a uniform or at least approximately uniform thread having the predetermined thread geometry is formed which extends over the first and the second portion (20, 26).

2. The method according to claim 1, wherein the screw blank (2) provided in step A comprises or consists of a strengthened material, in particular strengthened steel, wherein the strengthened material is in particular a heat-treated material.

3. The method according to claim 1 or 2, further comprising a step of strengthening, in particular heat-treating, the screw blank (12) or a precursor product of the screw blank (12) before step A.

4. The method according to claim 1 or 2, wherein the length of the thread (22, 28) extending over the first and the second portion is at least 500 mm, preferably at least 650 mm, particularly preferably at least 1000 mm and most particularly preferably at least 1500 mm.

5. The method according to any one of the preceding claims, wherein the thread geometry is **characterized by** a nominal diameter *d* and a thread pitch *p,* wherein the thread geometry is preferably additionally **characterized by** a core diameter.

6. The method according to any one of the preceding claims, wherein said first portion (20) has a length of at least six thread turns, preferably of at least nine thread turns.

7. The method according to any one of the preceding claims, wherein said first portion (20) has a length of at most 150 mm, preferably at most 120 mm, particularly preferably at most 100 mm and in particular at most 80 mm.

8. The method according to any one of the preceding claims, wherein the outer diameter in the uniform or at least approximately uniform thread (23, 28) extending over the first and the second portion (20, 26) varies by less than +/-10.0%, preferably less than +/-5.0%, particularly preferably less than +/-3.5% and most particularly preferably less than +/-2.5%.

10. The method according to any one of the preceding claims, wherein the following applies to the product of the k-th power of the nominal diameter d in millimeters and the length L_{G} in millimeters of the uniform thread (22, 28) extending over the first and the second portion (20, 26): ${L}_{G} ⋅ {d}^{k} \leq 10 , 000$ wherein k = 1.3.

10. The method according to any one of the preceding claims, wherein a screw head (18) is further formed at the second end of the screw blank (12), wherein the screw head (18) is preferably formed by cold forming, in particular by upsetting and pressing, or by hot forming, in particular using inductive heating.

11. The method according to any one of the preceding claims, wherein steps B and C are carried out in a continuous process on the same machine or in the same machine line.

12. The method according to any one of the preceding claims, wherein the thread (22, 28) is a wood screw thread.

13. The method according to any one of the preceding claims, wherein the screw (10) is a fully threaded screw.

14. The method according to any one of claims 1 to 11, wherein the thread (22, 28) is a concrete thread or a facade construction thread.

15. The method according to any one of the preceding claims, wherein in step C and/or step D ribs are rolled in at the thread base, and/or wherein teeth are formed at least in portions at least in the thread (22) in the first portion (20).

## Revendications

1. Procédé pour la fabrication d'une vis (10) avec une géométrie de filetage prédéterminée et une pointe de vis, comprenant les étapes suivantes :
A. Fournir une ébauche de vis (12) avec un premier diamètre (D1), où l'ébauche de vis (12) possède une première extrémité (14), correspondant à l'extrémité avant de la vis (10) à fabriquer à partir de l'ébauche de vis (12), et une deuxième extrémité (16), correspondant à l'extrémité arrière de la vis (10) à fabriquer à partir de l'ébauche de vis (12),
B. Réduire le premier diamètre (D1) à un deuxième diamètre (D2) dans une première section (20), qui est adjacent à la première extrémité (14) de l'ébauche de vis (12),
C. Usiner l'ébauche (12) dans ladite première section (20) par laminage avec des mâchoires plates, afin de former dans la première section (20) un filetage (22) et à la première extrémité (14) ladite pointe comme pointe filetée (24),
D. Usiner l'ébauche (12) dans une deuxième section (26) qui suit la première section (20) par laminage dans un procédé d'avance axiale, afin de former dans le deuxième section (26) un filetage (28), lequel se poursuit de manière continue à partir du filetage (22) dans la première section (20),
où le premier et le deuxième diamètre (D1, D2) de l'ébauche de vis (12) sont choisis de telle sorte que lors de l'usinage dans les étapes C et D, un filetage uniforme ou au moins approximativement uniforme avec la géométrie de filetage prédéterminée est formé, lequel s'étend sur la première et la deuxième section (20, 26).

2. Procédé selon la revendication 1, dans lequel l'ébauche de vis (2) fournie à l'étape A comprend ou consiste en un matériau traité, en particulier acier traité, où le matériau traité est en particulier un matériau traité thermiquement.

3. Procédé selon la revendication 1 ou 2, comprenant en outre une étape de traitement, en particulier de traitement thermique de l'ébauche de vis (12) ou d'un produit précurseur de l'ébauche de vis (12) avant l'étape A.

4. Procédé selon la revendication 1 ou 2, dans lequel la longueur du filetage (22, 28) s'étendant sur la première et la deuxième section est au moins 500 mm, de préférence au moins 650 mm, particulièrement de préférence au moins 1000 mm et tout particulièrement de préférence au moins 1500 mm.

5. Procédé selon l'une des revendications précédentes, dans lequel la géométrie de filetage est **caractérisée par** un diamètre nominal d et un pas de filetage p, la géométrie de filetage étant de préférence en outre **caractérisée par** un diamètre de noyau.

6. Procédé selon l'une des revendications précédentes, dans lequel ladite première section (20) a une longueur d'au moins six filets, de préférence d'au moins neuf filets.

7. Procédé selon l'une des revendications précédentes, dans lequel ladite première section (20) a une longueur d'au plus 150 mm, de préférence au plus 120 mm, particulièrement de préférence au plus 100 mm et en particulier au plus 80 mm.

8. Procédé selon l'une des revendications précédentes, dans lequel le diamètre extérieur dans le filetage uniforme ou au moins approximativement uniforme (23, 28) s'étendant sur la première et la deuxième section (20, 26) varie de moins de +/-10,0 %, de préférence de moins de +/-5,0 %, particulièrement de préférence de moins de +/-3,5 % et tout particulièrement de préférence de moins de +/-2,5 %.

10. Procédé selon l'une des revendications précédentes, dans lequel pour le produit de la k-ième puissance du diamètre nominal d en millimètres et de la longueur LG en millimètres du filetage uniforme s'étendant sur la première et la deuxième section (20, 26) il est satisfait à : ${L}_{G} ⋅ {d}^{k} \leq 10.000$ où k = 1,3.

10. Procédé selon l'une des revendications précédentes, dans lequel une tête de vis (18) est en outre formée à la deuxième extrémité de l'ébauche de vis (12), la tête de vis (18) étant de préférence formée par formage à froid, en particulier par refoulement et pressage, ou par formage à chaud, en particulier en utilisant un chauffage inductif.

11. Procédé selon l'une des revendications précédentes, dans lequel les étapes B et C sont réalisées dans un procédé continu sur la même machine ou dans la même ligne de machines.

12. Procédé selon l'une des revendications précédentes, dans lequel le filetage (22, 28) est un filetage pour vis à bois.

13. Procédé selon l'une des revendications précédentes, dans lequel la vis (10) est une vis à filetage total.

14. Procédé selon l'une des revendications 1 à 11, dans lequel le filetage (22, 28) est un filetage pour béton ou un filetage pour construction de façade.

15. Procédé selon l'une des revendications précédentes, dans lequel dans l'étape C et/ou l'étape D des nervures sont laminées au fond du filet, et/ou dans lequel au moins dans le filetage (22) dans la première section (20) des dents sont formés au moins par section.
